# EUROPÄISCHE PATENTANMELDUNG

(11) **EP 2 051 046 A2**
(43) Veröffentlichungstag der Anmeldung: **22.04.2009**
(21) Anmeldenummer: 08018027.6
(22) Anmeldetag: 15.10.2008
(51) Int. Cl.: G01D 5/245, G01D 5/347

(54) **Inkrementale Messeinrichtung zur Erfassung von Drehzahl, Drehrichtung und der Axialposition von axial verschieblichen Zahnrädern**

(30) Priorität: 18.10.2007 DE 102007049977
(71) Anmelder: KNORR-BREMSE Systeme für Nutzfahrzeuge GmbH, 80809 München (DE)
(72) Erfinder: Horn, Anton, 81247 München (DE); Windmüller, Tobias, 80807 München (DE); Huber, Christian, 80937 München (DE)
(74) Vertreter: Schönmann, Kurt

(57) **Zusammenfassung**

Die Erfindung betrifft eine inkrementale Messeinrichtung (12) zur Erfassung von Drehzahl, Drehrichtung und der Axialposition von aus einer mittleren Axialposition in zwei axiale Endpositionen axial verschieblichen Zahnrädern (1) mit zwei Zahnkränzen (2, 4), beinhaltend :
a) Sensoren (14 bis 22, welche beim Passieren eines Zahnes eines Zahnkranzes (2, 4) eine Signaländerung eines Ausgangssignals erzeugen und von welchen
b) wenigstens zwei Sensoren (14, 16) in Axial- und Umfangsrichtung zueinander versetzt angeordnet sind und sich gegenüber dem Umfang des einen Zahnkranzes (2) befinden, wenn sich das Zahnrad (1) in der mittleren Axialposition befindet,
c) wenigstens zwei weitere Sensoren (18, 20) in Axial- und Umfangsrichtung zueinander versetzt angeordnet sind und sich gegenüber dem Umfang des anderen Zahnkranzes (4) befinden, wenn sich das Zahnrad in der einen axialen Endposition befindet,
d) wenigstens ein weiterer Sensor (22) sich gegenüber dem Umfang des anderen Zahnkranzes (4) und die weiteren Sensoren (18, 20) sich gegenüber dem Umfang des einen Zahnkranzes (2) befinden, wenn sich das Zahnrad (1) in der anderen axialen Endposition befindet.

## Beschreibung

### Stand der Technik

Die Erfindung geht aus von einer inkrementalen Messeinrichtung zur Erfassung von Drehzahl, Drehrichtung und der Axialposition von aus einer mittleren Axialposition in zwei axiale Endpositionen axial verschieblichen Zahnrädern mit zwei Zahnkränzen gemäß Anspruch 1 sowie von einem Zahnradgetriebe, insbesondere von einem Schiebezahnradgetriebe beinhaltend eine solche inkrementale Messeinrichtung gemäß Anspruch 5.

Axial verschiebliche Zahnräder mit zwei Zahnkränzen kommen unter anderem in Schiebezahnradgetrieben vor, insbesondere in Schiebezahnradgetrieben von Kraftfahrzeugen, wobei ein solches Zahnrad beispielsweise eine zwischen den beiden Zahnkränzen angeordnete Nut aufweist, in welche eine Schaltgabel zum axialen Verschieben des Zahnrads eingreift. Bei solchen Zahnrädern ist eine Erfassung von Drehzahl, Drehrichtung und auch der gerade vorliegenden Axialposition durch eine geeignete Sensorik wünschenswert, um entsprechende Daten an ein elektronisches Steuergerät einer Getriebesteuerung zu liefern.

Bei inkrementalen Messeinrichtungen werden von einem Bezugspunkt aus durch Addition oder Subtraktion in Inkrementen (kleinster Zuwachs einer veränderlichen Größe) die momentane Größe ermittelt, beispielsweise ein Weg oder ein Winkel. Dazu werden in gleichmäßigen Abständen auf einem Träger aufgebrachte Markierungen optisch oder elektrisch abgetastet. Da die Zahnräder eines Zahnrades in gleichen Umfangsabständen entlang eines Zahnkranzes angeordnet sind, eignen sich diese grundsätzlich sich als Markierungen für eine inkrementale Messeinrichtung. Wenn ein Zahn eines Zahnkranzes einen Sensor einer solchen Messeinrichtung passiert, wird durch eine das Messsignal verarbeitende Auswerteelektronik in der Regel ein Rechtecksignal erzeugt.

Der vorliegenden Erfindung liegt die Aufgabe zugrunde, eine inkrementale Messeinrichtung der eingangs erwähnten Art zur Verfügung zu stellen, mit welcher zum einen die Drehzahl und die Drehrichtung als auch die Axialposition eines von aus einer mittleren Axialposition in zwei axiale Endpositionen axial verschieblichen Zahnrades mit zwei Zahnkränzen ermittelt werden kann.

Diese Aufgabe wird erfindungsgemäß durch die Merkmale von Anspruch 1 gelöst.

Vorteile der Erfindung

Gemäß der Erfindung wird eine inkrementale Messeinrichtung zur Erfassung von Drehzahl, Drehrichtung und der Axialposition eines aus einer mittleren Axialposition in zwei axiale Endpositionen axial verschieblichen Zahnrads mit zwei Zahnkränzen vorgestellt, welche folgendes beinhaltet:
a) Sensoren, welche beim Passieren eines Zahnes eines Zahnkranzes eine Signaländerung eines Ausgangssignals erzeugen und von welchen
b) wenigstens zwei Sensoren in Axial- und Umfangsrichtung zueinander versetzt angeordnet sind und sich gegenüber dem Umfang des einen Zahnkranzes befinden, wenn sich das Zahnrad in der mittleren Axialposition befindet,
c) wenigstens zwei weitere Sensoren in Axial- und Umfangsrichtung zueinander versetzt angeordnet sind und sich gegenüber dem Umfang des anderen Zahnkranzes befinden, wenn sich das Zahnrad in der einen axialen Endposition befindet,
d) wenigstens ein weiterer Sensor sich gegenüber dem Umfang des anderen Zahnkranzes und die weiteren Sensoren sich gegenüber dem Umfang des einen Zahnkranzes befinden, wenn sich das Zahnrad in der anderen axialen Endposition befindet. Mit anderen Worten schlägt die Erfindung vor, mit Hilfe von lediglich fünf einfachen Sensoren, wie sie für inkrementale Messeinrichtungen üblicherweise verwendet werden, Signale hinsichtlich der Drehzahl, der Drehrichtung sowie der axialen Position von Zahnrädern zu bestimmen. Dabei sorgt jeweils ein Paar zueinander in Axial- und Umfangsrichtung versetzt angeordneter Sensoren für die Gewinnung der Richtungsinformation, so dass die Zählrichtung entsprechend bestimmt werden kann. Durch die spezielle axiale Anordnung der beiden Sensorpaare sowie des einen Sensors ist zusätzlich eine Information darüber erhältlich, in welcher axialen Position sich das Zahnrad gerade befindet.

Darüber hinaus sind bei einer Detektion von schnellen Drehrichtungswechseln mit Hilfe der erfindungsgemäßen inkrementalen Messeinrichtung Umfangsschwingungen von Zahnrädern detektierbar.

Nicht zuletzt können bei der inkrementalen Messeinrichtung gemäß der Erfindung die Positionen der Sensoren an die jeweilige Teilung der Zahnkränze bzw. an unterschiedliche Zahnradgeometrien individuell angepasst werden.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt beinhalten die Sensoren wenigstens einen der folgenden Sensoren: Einen optischen Signalgeber, einen induktiven Signalgeber oder einen Hallgeber.

Um die axiale Position des Zahnrads eindeutig bestimmen zu können, beinhaltet die Auswerteelektronik eine Zuordnung zwischen den von den Sensoren gelieferten Signalen und den Positionen des Zahnrads. Eine solche Zuordnung könnte beispielsweise wie folgt aussehen :
a) Die einen Sensoren liefern Signale, während die weiteren Sensoren sowie der weitere Sensor keine Signale liefern (Mittelposition des Zahnrads),
b) die weiteren Sensoren liefern Signale, während die einen Sensoren und der weitere Sensor keine Signale liefern (eine Endposition des Zahnrads),
c) die weiteren Sensoren sowie der weitere Sensor liefern Signale, während die einen Sensoren keine Signale liefern (andere Endposition des Zahnrads).

Genaueres geht aus der folgenden Beschreibung eines Ausführungsbeispiels hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine schematische Querschnittsansicht eines Umfangsabschnitts eines Zahnrads mit zwei Zahnkränzen mit einer inkrementalen Messeinrichtung gemäß einer bevorzugten Ausführungsform der Erfindung;
- Fig.2: eine Draufsicht auf das Zahnrad und die inkrementale Messeinrichtung von Fig.1;
- Fig.3: ein Diagramm von Signalen zweier Sensoren der inkrementalen Messeinrichtung von Fig.1 über der Zeit t bei einer Drehung des Zahnrads in einer Richtung;
- Fig.4: ein Diagramm von Signalen zweier Sensoren der inkrementalen Messeinrichtung von Fig.1 über der Zeit t bei einer Drehung des Zahnrads in Gegenrichtung.

### Beschreibung des Ausführungsbeispiels

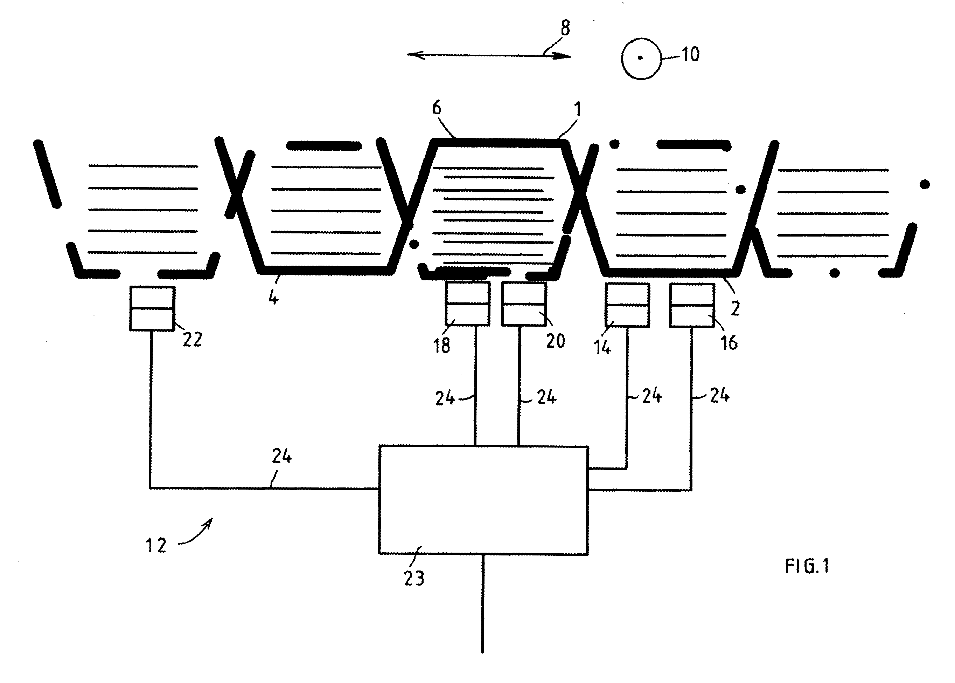

In Fig.1 ist eine schematische Querschnittsdarstellung eines Umfangsabschnitts eines axial verschieblichen Zahnrads 1 mit zwei Zahnkränzen 2, 4 schematisch gezeigt, wie es beispielsweise in einem Schiebezahnradgetriebe eines Kraftfahrzeugs verwendet wird. Das Zahnrad 1 weist beispielsweise eine zwischen den beiden vorzugsweise geometrisch identisch ausgebildeten Zahnkränzen 2, 4 angeordnete Nut 6 mit glatter Nutoberfläche auf, in welche eine nicht dargestellte Schaltgabel zum axialen Verschieben des Zahnrads 1 eingreift. Die axiale Verschieberichtung sei durch einen Pfeil 8 symbolisiert und die

Drehachse durch einen Pfeil 10 senkrecht zur Zeichenebene.

Dabei ist in Fig.1 eine axiale Mittellage des Zahnrads, in welcher keiner der beiden Zahnkränze 2, 4 mit einem benachbarten Zahnrad kämmt oder in Eingriff mit einem solchen steht, in durchgezogener Linie, eine erste, in Fig.1 rechte axiale Endposition des Zahnrads 1 mit strichpunktierter Linie und eine zweite, in Fig.1 linke axiale Endposition des Zahnrads 1 in gestrichelter Linie gezeichnet. In den beiden Endpositionen gerät jeweils ein Zahnkranz 2, 4 des Zahnrads mit einem hier nicht gezeigten, axial benachbart und koaxial angeordneten Zahnrad in Eingriff.

Bei solchen axial verschieblichen Zahnrädern 1 ist daher neben einer Erfassung von Drehzahl und Drehrichtung auch eine Information über die gerade vorliegende Axialposition wünschenswert, d.h. darüber, ob sich das Zahnrad in der axialen Mittelposition, der ersten Endposition (rechts) oder in der zweiten Endposition (links) befindet. Hierüber sind entsprechende Daten an ein elektronisches Steuergerät einer Getriebesteuerung zu liefern.

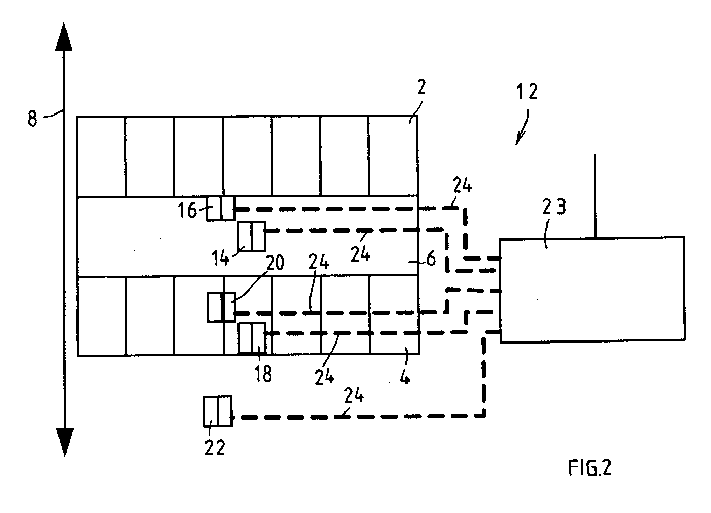

Die in Fig.1 und Fig.2 gezeigte inkrementale Messeinrichtung 12 zur Erfassung der genannten Daten beinhaltet folgendes :
a) Sensoren 14, 16, 18, 20, 22, welche beim Passieren eines Zahnes eines Zahnkranzes 2, 4 eine Signaländerung eines Ausgangssignals erzeugen und von welchen
b) zwei Sensoren 14, 16 in Axial- und Umfangsrichtung zueinander versetzt angeordnet sind und sich gegenüber dem Umfang des einen, hier rechten Zahnkranzes 2 befinden, wenn sich das Zahnrad 1 in der mittleren Axialposition befindet, und
c) zwei weitere Sensoren 18, 20 in Axial- und Umfangsrichtung zueinander versetzt angeordnet sind und sich gegenüber dem Umfang des anderen, hier linken Zahnkranzes 4 befinden, wenn sich das Zahnrad 1 in der einen, hier rechten axialen Endposition befindet, und
d) ein weiterer Sensor 22 sich gegenüber dem Umfang des anderen, hier linken Zahnkranzes 4 und sich die weiteren Sensoren 18, 20 gegenüber dem Umfang des einen, hier rechten Zahnkranzes 2 befinden, wenn sich das Zahnrad 1 in der anderen, hier linken axialen Endposition befindet.

Die Sensoren 14 bis 22 beruhen auf elektrischen und/oder optischem Messprinzip und basieren vorzugsweise alle auf dem gleichen Messprinzip. Vorzugsweise werden optische Signalgeber, induktive Signalgeber oder Hallgeber verwendet. Die jeweiligen Messprinzipen solcher inkrementaler Sensoren 14 bis 22 sind hinlänglich bekannt. Deshalb soll hier nicht weiter darauf eingegangen werden. Die Sensoren 14 bis 22 sind jeweils durch eine Signalleitung 24 mit einer Auswerteelektronik 23 signalleitend verbunden, welche beispielsweise in ein elektronisches Steuergerät einer Getriebesteuerung integriert ist (Fig.2).

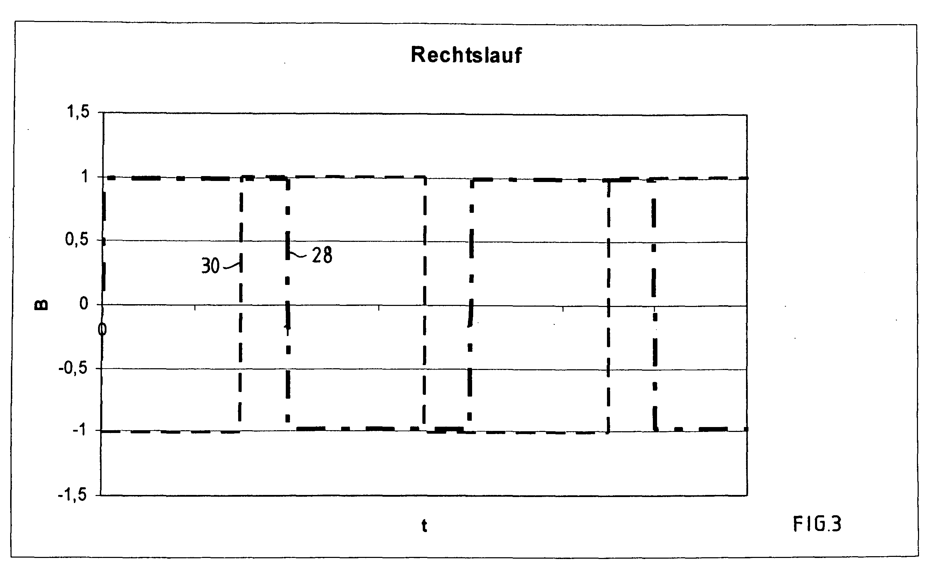

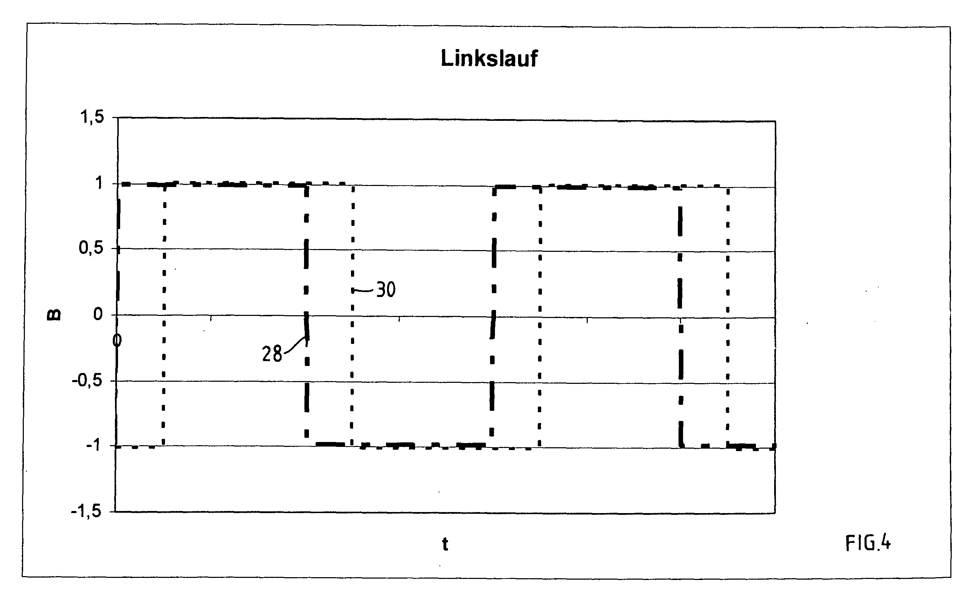

Vor diesem Hintergrund ist die Funktionsweise der inkrementalen Messeinrichtung 12 wie folgt :
In der Mittelposition des Zahnrads 1, welche in Fig.1 in durchgezogener Linie gezeichnet ist, liegen die Sensoren 14 und 16 dem Umfang des rechten Zahnkranzes 2 gegenüber, während die Sensoren 18 und 20 im Bereich der Nut 6 angeordnet sind. Der Sensor 22 liegt in der Mittelposition weder einem Zahnkranz 2 oder 4 noch der Nut 6 gegenüber, sondern ist axial um ein Stück entfernt vom linken Zahnkranz 4 des Zahnrad 1 angeordnet. Gemäß der in Fig.2 gezeigten Draufsicht sind die Sensoren 14 und 16 bzw. 18 und 20 axial und in Umfangsrichtung bezogen auf die Drehrichtung des Zahnrads 1 um ein Stück versetzt angeordnet, in Umfangsrichtung beispielsweise um ein Viertel der Teilung T der Zahnkränze 2, 4 Zahnrads 1, damit sich die zu den Sensoren 14, 16 bzw. 18, 20 weisende Zahnfläche eines Zahns mit den sensierenden Flächen der Sensoren 14, 16 bzw. 18, 20 zumindest teilweise überdeckt, wenn dieser Zahn die Sensoren 14, 16 bzw. 18, 20 passiert.
   Alternativ könnten die Sensoren 14, 16 bzw. 18, 20 um ein Mehrfaches der Teilung T plus ein Bruchteil der Teilung T, vorzugsweise ein Viertel der Teilung T in Umfangsrichtung zueinander versetzt sein. Der Sensor 22 befindet sich vorzugsweise auf einer gedachten Mittellinie zwischen den Sensoren 14, 16 bzw. 18, 20, die parallel zu einer Mittelachse des Zahnrads 1 ist.
   Wenn sich nun das Zahnrad 1 in der Mittelposition befindet und in einer Richtung dreht, gibt der Sensor 22 kein Signal, weil er nicht im Umfangsbereich des linken Zahnkranzes 4 liegt. Weiterhin liefern aber auch die Sensoren 18 und 20 kein Signal, weil sie der in Umfangsrichtung glatt verlaufenden Nutoberfläche der Nut 6 gegenüberliegen und in der Nut 6 keine signalauslösenden prominenten Teile vorhanden sind. Demgegenüber erzeugen die Sensoren 14 und 16 Signale, da sie dem Umfang des rechten Zahnkranzes 2 gegenüberliegen. Beim Passieren eines Zahnes erzeugt jeder der beiden Sensoren 14, 16 ein elektrisches Signal, welches von der Auswerteelektronik 23 in die in Fig.3 und Fig.4 gezeigten Rechtecksignal umgewandelt wird. Da die Sensoren 14 und 16 in Umfangsrichtung gesehen um ein Stück zueinander versetzt angeordnet sind, ergeben sich auch zwei in Bezug auf die Zeitachse t zueinander versetzte Rechtecksignale 28 und 30. Angesichts Fig.3 ist leicht vorstellbar, dass die Auswerteelektronik 23 anhand einer geeigneten Routine leicht feststellen kann, die sensierende Fläche welches der zueinander versetzt angeordneten Sensoren 14, 16 zuerst einen Zahn des rechten Zahnkranzes 2 detektiert hat und daraus eine Information über die Drehrichtung des Zahnrades 1 gewinnen. Im vorliegenden Fall läuft z.B. das Rechtecksignal 28 von Sensor 14 gegenüber dem Rechtecksignal 30 von Sensor 16 vor, was beispielsweise auf einen Rechtslauf des Zahnrads 1 hindeutet, was in Fig.3 gezeigt ist.
   Im anderen Fall, also bei einer Drehung des Zahnrads 1 in Gegenrichtung (Linkslauf), läuft hingegen das Rechtecksignal 28 von Sensor 14 gegenüber dem Rechtecksignal 30 von Sensor 16 nach, was beispielsweise auf einen Rechtslauf des Zahnrads 1 hindeutet, wie Fig.4 veranschaulicht.
   In jedem der beschriebenen Fälle wird die Anzahl der von der Auswerteelektronik 23 erzeugten Amplituden der Rechtecksignale 28, 30 ausgehend von einem Nullpunkt gezählt, und aus der Anzahl dieser Amplituden auf der Basis einer entsprechenden Berechnungsroutine die Drehzahl des Zahnrads 1 berechnet.
   In der ersten oder in Fig.1 rechten Endposition des Zahnrades, welche in Fig.1 in gestrichelter Linie gezeichnet ist, liegen die Sensoren 14 und 16 der glatten Nutfläche der Nut 6 gegenüber und liefern daher kein Signal. Genauso liegt der Sensor 22 dann weder einem Zahnkranz 2, 4 noch der Nut 6 gegenüber, sondern ist weiterhin axial um ein Stück entfernt vom linken Zahnkranz 4 des Zahnrads angeordnet. Demgegenüber liegen die Sensoren 18 und 20 dem linken Zahnkranz 4 gegenüber und liefern, da sie in analoger Weise wie die Sensoren 14 und 16 axial- und umfangsversetzt zueinander angeordnet sind, nach Verarbeitung durch die Auswertelektronik 23 Rechtecksignale 28, 30 gemäß Fig.3 und Fig.4, welche auf Rechts- bzw. Linkslauf hindeuten. Die Drehzahlberechnung erfolgt dabei wie im Fall der Mittelposition beschrieben.
   In der zweiten oder in Fig.1 linken Endposition des Zahnrads 1, welche in Fig.1 in strichpunktierter Linie gezeichnet ist, liegen die Sensoren 18 und 20 dem rechten Zahnkranz 2 gegenüber und liefern nach Verarbeitung durch die Auswertelektronik Rechtecksignale 28, 30 gemäß Fig.3 und Fig.4, welche auf Rechts- bzw. Linkslauf hindeuten. Die Drehzahlberechnung erfolgt dabei wie im Fall der Mittelposition beschrieben. Genauso liegt der Sensor 22 dem linken Zahnkranz 4 gegenüber und liefert durch die Auswerteelektronik 23 ein einzelnes Rechtecksignal 28 oder 30, welches für sich genommen beispielsweise ebenfalls zur redundanten Berechnung der Drehzahl, aber nicht der Drehrichtung herangezogen werden könnte. Demgegenüber liegen die Sensoren 14 und 16 dann weder einem Zahnkranz 2, 4 noch der Nut 6 gegenüber, sondern sind axial um ein Stück entfernt vom rechten Zahnkranz 2 angeordnet.
   Wesentlich ist, dass die Auswerteelektronik 23 eine Zuordnung beispielsweise in Form von vorgegebenen Tabellen oder Kennfeldern enthält, welche die Fälle
   a) die Sensoren 14 und 16 liefern Signale, während die Sensoren 18, 20 und 22 keine Signale liefern (Mittelposition des Zahnrads),
   b) die Sensoren 18 und 20 liefern Signale, während die Sensoren 14, 16 und 22 keine Signale liefern (erste oder rechte Endposition des Zahnrads),
   c) die Sensoren 18, 20 und 22 liefern Signale, während die Sensoren 14 und 16 keine Signale liefern (zweite oder linke Endposition des Zahnrads), den entsprechenden axialen Positionen (Mittelposition, rechte oder linke Endposition) des Zahnrads 1 zuordnen. Diese Information oder diese Daten werden dann von der Auswerteelektronik 23 an eine Getriebesteuerung geliefert.

### Bezugszeichenliste

- 1: Zahnrad
- 2: Zahnkranz
- 4: Zahnkranz
- 6: Nut
- 8: Pfeil
- 10: Pfeil
- 12: Messeinrichtung
- 14: Sensor
- 16: Sensor
- 18: Sensor
- 20: Sensor
- 22: Sensor
- 23: Auswerteelektronik
- 24: Signalleitung
- 28: Rechtecksignal
- 30: Rechtecksignal

## Patentansprüche

1. Inkrementale Messeinrichtung (12) zur Erfassung von Drehzahl, Drehrichtung und der Axialposition von aus einer mittleren Axialposition in zwei axiale Endpositionen axial verschieblichen Zahnrädern (1) mit zwei Zahnkränzen (2, 4), beinhaltend :
a) Sensoren (14 bis 22, welche beim Passieren eines Zahnes eines Zahnkranzes (2, 4) eine Signaländerung eines Ausgangssignals erzeugen und von welchen
b) wenigstens zwei Sensoren (14, 16) in Axial- und Umfangsrichtung zueinander versetzt angeordnet sind und sich gegenüber dem Umfang des einen Zahnkranzes (2) befinden, wenn sich das Zahnrad (1) in der mittleren Axialposition befindet,
c) wenigstens zwei weitere Sensoren (18, 20) in Axial- und Umfangsrichtung zueinander versetzt angeordnet sind und sich gegenüber dem Umfang des anderen Zahnkranzes (4) befinden, wenn sich das Zahnrad in der einen axialen Endposition befindet,
d) wenigstens ein weiterer Sensor (22) sich gegenüber dem Umfang des anderen Zahnkranzes (4) und die weiteren Sensoren (18, 20) sich gegenüber dem Umfang des einen Zahnkranzes (2) befinden, wenn sich das Zahnrad (1) in der anderen axialen Endposition befindet.

2. Inkrementale Messeinrichtung nach Anspruch 1, **dadurch gekennzeichnet, dass** die Sensoren (14 bis 22) wenigstens einen der folgenden Sensoren beinhalten : Einen optischen Signalgeber, einen induktiven Signalgeber oder einen Hallgeber.

3. Inkrementale Messeinrichtung nach Anspruch 1 oder 2, **dadurch gekennzeichnet, dass** eine Auswerteelektronik (23) eine Zuordnung zwischen den von den Sensoren (14 bis 22) gelieferten Signalen und den Positionen des Zahnrads (1) beinhaltet.

4. Inkrementale Messeinrichtung nach Anspruch 3, **dadurch gekennzeichnet, dass** die Zuordnung wenigstens die folgenden Fälle beinhaltet :
a) Die einen Sensoren (14, 16) liefern Signale, während die weiteren Sensoren (18, 20) sowie der weitere Sensor (22) keine Signale liefern (Mittelposition des Zahnrads),
b) die weiteren Sensoren (18, 20) liefern Signale, während die einen Sensoren (14, 16) und der weitere Sensor (22) keine Signale liefern (eine Endposition des Zahnrads),
c) die weiteren Sensoren (18, 20) sowie der weitere Sensor (22) liefern Signale, während die einen Sensoren (14, 16) keine Signale liefern (andere Endposition des Zahnrads).

5. Zahnradgetriebe, insbesondere Schiebezahnradgetriebe mit wenigstens einem aus einer mittleren Axialposition in zwei axiale Endpositionen axial verschieblichen Zahnrad (1) mit zwei Zahnkränzen (2, 4), umfassend eine inkrementale Messeinrichtung (12) nach wenigstens einem der vorhergehenden Ansprüche.

6. Zahnradgetriebe nach Anspruch 5, **dadurch gekennzeichnet, dass** das Zahnrad (1) eine zwischen den beiden Zahnkränzen (2, 4) angeordnete Nut (6) aufweist, in welche eine Schaltgabel zum axialen Verschieben des Zahnrads (1) eingreift.
